(19)

Europäisches
Patentamt
European
Patent Office
Office européen
des brevets

(11) **EP 3 141 716 A1**

(12) **EUROPEAN PATENT APPLICATION**

(43) Date of publication:
**15.03.2017  Bulletin 2017/11**

(51) Int Cl.:
*F01N 3/021* [(2006.01)]  *F01N 3/10* [(2006.01)]
*F01N 3/20* [(2006.01)]

(21) Application number: **16183438.7**

(22) Date of filing: **09.08.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.08.2015  JP 2015163285**

(71) Applicant: **Toyota Jidosha Kabushiki Kaisha
Toyota-shi, Aichi-ken, 471-8571 (JP)**

(72) Inventors:
• **TAKADA, Keishi**
  **Aichi, 471-8571 (JP)**
• **OHASHI, Nobumoto**
  **Aichi, 471-8571 (JP)**
• **NAKAYAMA, Shigeki**
  **Aichi, 471-8571 (JP)**

(74) Representative: **Smith, Samuel Leonard
J A Kemp
14 South Square
Gray's Inn
London WC1R 5JJ (GB)**

(54) **EXHAUST GAS PURIFICATION APPARATUS FOR INTERNAL COMBUSTION ENGINE**

(57)    The present invention relates to an exhaust gas purifying apparatus for internal combustion engine (1) having a selective reduction type NOx catalyst (10) which selectively reduces (deoxidizes) NOx in exhaust gas.

An addition control part (30) is configured to make an adding device (9) add urea water having a specific amount obtained by adding an urea water amount (Yb), which is necessary for equilibrium adsorption amount control, to a predetermined amount (Yad), in a case where a difference between a target adsorption amount (Qtrg) and an estimated adsorption amount of ammonia (Qp) is equal to or larger than a predetermined threshold (DQth) )when a temperature (Ts) of a selective reduction type NOx catalyst (10) changes from a temperature equal to or higher than said predetermined temperature (Tsth) to a temperature lower than said predetermined temperature (Tsth).

FIG.1

**Description**

BACKGROUND OF THE INVENTION

1. Field of the Invention

The present invention relates to an exhaust gas purifying apparatus for internal combustion engine having a selective reduction type NOx catalyst which selectively reduces (deoxidizes) NOx in exhaust gas.

2. Description of the Related Art

An exhaust gas purifying apparatus is conventionally known (for example, see paragraph of WO2013/190658, and claim 4, and paragraphs 0016, 0017 of Japanese Unexamined Patent Application NO. 2009-270449). The exhaust gas purifying apparatus adds urea water to a selective reduction type NOx catalyst (hereinafter, it may be referred to as "SCR catalyst".) disposed in an exhaust passage of an internal combustion engine, and purifies NOx flowing to the SCR catalyst with "ammonia ($NH_3$) obtained by hydrolyzing the added urea water".
Specifically, the device disclosed in the WO2013/190658 (hereinafter, it is referred to as "first conventional device".) is configured so as to perform equilibrium adsorption amount control where urea water is added from a urea water addition valve so that "an equilibrium adsorption amount", which is "an adsorption amount of $NH_3$ in/on the SCR catalyst when adsorption of $NH_3$ and desorption of $NH_3$ are in an equilibrium state in/on the SCR catalyst and NOx is able to be stably purified", is maintained at a predetermined target adsorption amount. According to the equilibrium adsorption amount control, an amount of the ammonia adsorbed to/on the SCR catalyst (amount of ammonia adsorption) is maintained so that high NOx purification rate can be obtained stably.
The device disclosed in the Japanese Unexamined Patent Application NO. 2009-270449 (hereinafter, it is referred to as "second conventional device".) is configured to perform equivalence ratio control in which adding amount of urea water is controlled so that equivalence ratio of $NH_3$ to NOx flowing to the SCR catalyst (i.e., NOx that needs to be selective reduced) becomes equal to 1, when an amount of $NH_3$ (saturated adsorption amount) which the SCR catalyst can absorb declines owing to an increase in temperature of the SCR catalyst Thus, NOx can be purified at a high purification rate even when the amount of $NH_3$ which the SCR catalyst can absorb declines since the temperature of the SCR catalyst becomes high.

SUMMARY OF THE INVENTION

Therefore, an exhaust gas purifying apparatus, which can purify NOx efficiently by performing the equivalence ratio control adopted by the second conventional device when the SCR catalyst is at high temperature and performing the equilibrium adsorption amount control adopted by the first conventional device when the SCR catalyst is at low temperature, can be configured.
However, in this exhaust gas purifying apparatus, since the equivalence ratio control is performed when the SCR catalyst is at high temperature, some of $NH_3$, which was adsorbed to/on the SCR catalyst, is desorbed from the SCR catalyst without reacting with NOx, and most of $NH_3$, which was adsorbed to/on the SCR catalyst, is consumed (in other words, most of $NH_3$ becomes NOx by being oxidized and this NOx becomes $N_2$ by reacting with surplus $NH_3$). For this reason, when control manner of urea water is changed to the equilibrium adsorption amount control from the equivalence ratio control due to a decrease in temperature of the SCR catalyst from "temperature in the case where the equivalence ratio control is performed". An "adsorption amount of $NH_3$ to/on the SCR catalyst is considerably insufficient relative to the target adsorption amount at the changing time.
On the other hand, in the equilibrium adsorption amount control, a specified amount of urea water is continued to be supplied, and the specified amount is determined on the assumption that the adsorption state of $NH_3$ in/on the SCR catalyst (hereinafter, it may be referred to as "ammonia adsorption state".) is the above mentioned equilibrium state. Therefore, if the equilibrium adsorption amount control is continued when the ammonia adsorption state is largely different from the equilibrium state, it takes a long time to reach the equilibrium state. Therefore, the first conventional device temporarily increases amount of the urea water in such a case. However, the first conventional device does not consider specifically how to increase amount of the urea water.
On the other hand, an "estimated adsorption amount model" which assumes an amount of ammonia adsorbed to/on the SCR catalyst based on an output value of a NOx sensor or the like is also known. Hereinafter, adsorption amount of ammonia which is assumed may be referred to as an "estimated ammonia adsorption amount." Furthermore, it is possible to feedback-control an amount of urea water so that an estimated ammonia adsorption amount assumed by the estimated adsorption amount model becomes equal to the target adsorption amount, when performing the equilibrium adsorption amount control. However, since the estimated adsorption amount model calculates the estimated ammonia adsorption amount using an output of the NOx sensor or the like, the estimated ammonia adsorption amount is affected by output error of the NOx sensor or the like, and thereby the estimated ammonia adsorption amount may be largely different from the true value. Therefore, even when the equilibrium adsorption amount control is carried out by the feedback control, an actual amount of ammonia adsorption may be different from the target adsorption amount.

The present invention has been made to cope with the above problems. Namely, the present invention has an object to provide an exhaust gas purifying apparatus for internal combustion engine (hereinafter, it is referred to as "device of the present invention".), which is applied to an internal combustion engine comprising a SCR catalyst and an addition device adding urea water, and can bring an adsorption amount of ammonia in the SCR catalyst to a target adsorption amount quickly and accurately when control manner is changed to equilibrium adsorption amount control from equivalence ratio control.

An internal combustion engine to which the device of the present invention is provided with a selective reduction type NOx catalyst disposed in an exhaust passage and selectively reducing NOx in exhaust gas with ammonia and an adding device for adding urea water to a portion upstream of said selective reduction type NOx catalyst (10) in said exhaust passage to supply said selective reduction type NOx catalyst (10) with said ammonia ($NH_3$) obtained by hydro-lyzing urea.

The device of the present invention is further provided with an adsorption amount estimation part and an addition control part.

The adsorption amount estimation part estimates an adsorption amount of ammonia adsorbed to the selective reduction type NOx catalyst (i.e., an estimated adsorption amount, an estimated ammonia adsorption amount) based on at least "an amount of ammonia supplied to the selective reduction type NOx catalyst and another amount of ammonia consumed in the selective reduction type NOx catalyst by reacting with NOx". It should be noted that the adsorption amount estimation part can further estimate the estimated ammonia adsorption amount on the basis of amount of $NH_3$ desorbed from the selective reduction type NOx catalyst (desorbed $NH_3$ amount E) and/or amount of $NH_3$ consumed by being oxidized without reacting with NOx in the selective reduction type NOx catalyst (oxidized $NH_3$ amount F).

The addition control part carries out an equivalence ratio control when temperature of the selective reduction type NOx catalyst is equal to or higher than a predetermined temperature.

The equivalence ratio control is a control to make the adding device add the urea water having a necessary amount for producing ammonia, which has an amount for making an equivalence ratio of the ammonia to the NOx that needs to be selectively reduced in the selective reduction type NOx catalyst equal to 1.

The control part carries out an equilibrium adsorption amount control when temperature of the selective reduction type NOx catalyst is lower than the predetermined temperature.

The equilibrium adsorption amount control is a control to make the adding device add the urea water having an necessary amount for producing ammonia, that has an amount for maintaining an equilibrium adsorption amount, which is an adsorption amount of ammonia in the selective reduction type NOx catalyst when adsorption of ammonia and desorption of ammonia are in an equilibrium state in the selective reduction type NOx catalyst, at a predetermined target adsorption amount.

The addition control part is configured to make the adding device add the urea water having a specific amount obtained by adding the urea water amount, which is necessary for the equilibrium adsorption amount control, to a predetermined amount, in a case where a difference between the target adsorption amount and the estimated adsorption amount of ammonia is equal to or larger than a predetermined threshold when a temperature of the selective reduction type NOx catalyst changes from a temperature equal to or higher than the predetermined temperature to a temperature lower than the predetermined temperature.

Therefore , when a difference between the estimated adsorption amount of ammonia and the target adsorption amount is large in the case where the equivalence ratio control is changed to the equilibrium adsorption amount control, urea water whose amount is larger than amount of urea water supplied in the equilibrium adsorption amount control is added, and thereby ammonia whose amount is larger than a necessary amount of ammonia for the equilibrium adsorption amount control is supplied to the selective reduction type NOx catalyst. Therefore, it is possible to quickly bring an actual amount of ammonia adsorption close to the target adsorption amount. Furthermore, in the subsequent equilibrium adsorption amount control, since the estimated ammonia adsorption amount including an error is not used to adjust a urea water amount, the equilibrium adsorption amount control can be carried out accurately. As a result, it is possible to purify NOx stably.

Furthermore, in one embodiment of the present invention, the addition control part is configured to make the adding device add the urea water having the specific amount until the difference becomes less than a positive value equal to or less than the predetermined threshold or becomes equal to 0, when the temperature of the selective reduction type NOx catalyst is changed from the temperature equal to or higher than the predetermined temperature to the temperature lower than the predetermined temperature. Therefore, it is possible to bring an actual amount of ammonia adsorption close to the target adsorption amount more quickly. On the other hand, according to this embodiment, it is also possible to avoid supplying urea water having an excessive amount compared with a necessary amount of urea water for bringing an actual amount of ammonia adsorption close to the target adsorption amount.

Other objects, other features, and accompanying advantages of the present invention are easily understood from the description of embodiments of the present invention to be given referring to the following drawings.

BRIEF DESCRIPTION OF THE DRAWINGS

FIG. 1 is a schematic view of an internal combustion engine to which an exhaust gas purifying apparatus (the purifying apparatus) according to an embodiment of the present invention is applied.

FIGS. 2 is a flowchart for illustrating an "estimated ammonia adsorption amount calculation routine" carried out by a CPU of the purifying apparatus.

FIG. 3 is a view for illustrating a relationship between temperature of a SCR catalyst and amount of ammonia absorbed to/on the SCR catalyst in an equilibrium adsorption amount control.

FIG. 4 is a view for illustrating a relationship between a target adsorption amount and NOx purification rate of the SCR catalyst in the equilibrium adsorption amount control.

FIG. 5 is a view for illustrating a relationship between the target adsorption amount and a slip amount in the equilibrium adsorption amount control.

FIG. 6 is a flowchart for illustrating a routine of "addition control" carried out by the CPU of the purifying apparatus.

DETAILED DESCRIPTION OF THE PREFERRED EMBODIMENTS

Hereinafter, a "purifying apparatus of an internal combustion engine (it may be referred to as a purifying apparatus)" of an embodiment of the present invention will be discussed referring to the drawings.

(Constitution)

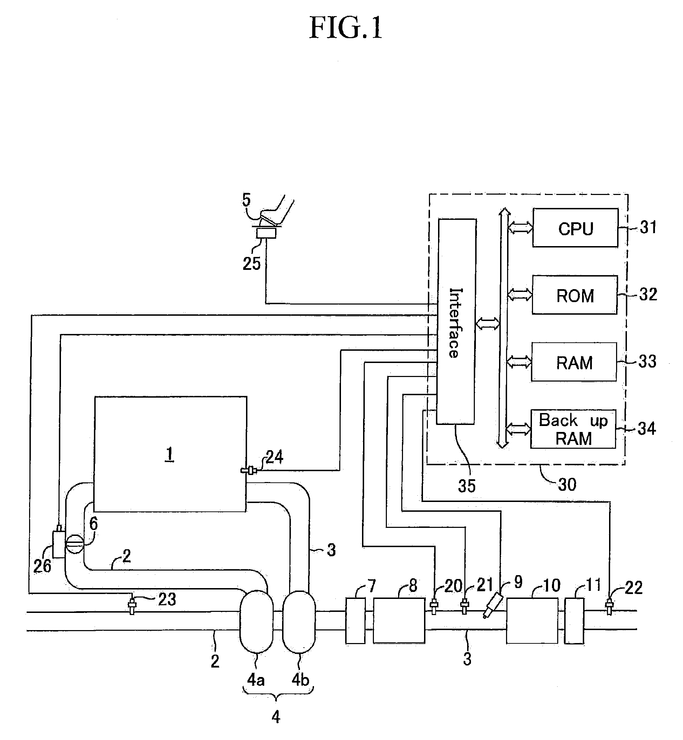

The purifying apparatus is applied to an internal combustion engine (hereinafter, it is referred to as an "engine".) shown in FIG. 1. The engine 1 is a diesel engine.

The engine 1 includes an intake passage portion 2 constituting an intake passage and an exhaust passage portion 3 constituting an exhaust passage.

The intake passage portion 2 includes a compressor 4a and a throttle valve 6 in the order from the intake upstream side of the intake passage portion 2. The compressor 4a constitutes a turbocharger 4 together with a turbine 4b. When a rotating shaft of the compressor 4a rotates, the air passing through the intake passage portion 2 is compressed by the compressor 4a. The throttle valve 6 adjusts a cross-sectional opening area of the intake passage portion 2 to adjust an amount of air passing through the intake passage portion 2.

The exhaust passage portion 3 includes the turbine 4b, an oxidation catalyst 7, a particulate filter 8 (hereinafter, it is referred to as a "DPF 8".), a urea water addition valve 9, a selective reduction type NOx catalyst 10 (hereinafter, it is referred to as a "SCR catalyst 10".), and an ammonia slip catalyst 11 in the order from the exhaust upstream side of the exhaust passage portion 3.

A rotating shaft (not shown) of the turbine 4b is connected to the rotating shaft (not shown) of the compressor 4a. The turbine 4b rotates the rotating shaft of the compressor 4a by rotating the rotating shaft thereof when receiving exhaust (exhaust gas) flowing through the exhaust passage portion 3.

The oxidation catalyst 7 oxidizes NO (nitric monoxide) to thereby produce $NO_2$ (nitrogen dioxide).

The DPF 8 is constituted by a honeycomb-shaped ceramic body, and for trapping (catching) particulates in the exhaust. The DPF 8 can carry out continuously regenerating trap by oxidizing the trapped particulates with $NO_2$ in the exhaust.

Urea water having constant concentration is supplied to the urea water addition valve 9 from the urea water tank (not shown). The urea water addition valve 9 supplies the urea water to a positon upstream of the SCR catalyst 10 in the exhaust passage portion 3 (i.e., exhaust passage). The purifying apparatus produces ammonia by hydrolyzing the urea water added in the exhaust passage portion 3 using heat of the exhaust, and supplies the ammonia to the SCR catalyst 10. The urea water addition valve 9 injects (sprays) urea water for driving time t at every constant period T. An electrical control unit 30 described later can change amount of urea water injected from the urea water addition valve 9 by changing the period T.

The SCR catalyst 10 is a catalyst having a $NH_3$ occluding capacity to adsorb $NH_3$ (ammonia). The SCR catalyst 10 changes NOx into harmless $N_2$ by enhancing denitrification between $NH_3$ obtained by hydrolyzing the urea water and NOx in the exhaust.

The ammonia slip catalyst 11 has an oxidation function. The ammonia slip catalyst 11 changes $NH_3$ into $N_2$ or

NOx by oxidizing $NH_3$, when $NH_3$ flows out from the SCR catalyst 10 without reacting with NOx. The ammonia slip catalyst 11 oxidizes CO (carbon monoxide) in the exhaust to thereby change the CO into CO2 (carbon dioxide).

On the other hand, the purifying apparatus includes an exhaust gas temperature sensor 20, a first NOx sensor (upstream side NOx sensor) 21, a second NOx sensor (downstream side NOx sensor) 22, a heating wire type air flow meter 23, a crank position sensor 24, an accelerator opening sensor 25, and a throttle position sensor 26.

The exhaust gas temperature sensor 20 is disposed in the exhaust passage portion 3(exhaust passage) between the urea water addition valve 9 and the SCR catalyst 10. The exhaust gas temperature sensor 20 outputs a signal representing a temperature of the exhaust gas flowing through the exhaust passage portion 3. Noted that a temperature detected by the exhaust gas temperature sensor 20 is used to estimate a temperature Ts of the SCR catalyst 10 (catalyst bed temperature). In this embodiment, the temperature detected (acquired) by the exhaust gas temperature sensor 20 is treated as equal to a temperature Ts of the SCR catalyst 10. However, a temperature obtained by low-pass filtering the temperature detected by the exhaust gas temperature sensor 20 may be treated as a temperature Ts of the SCR catalyst 10.

The first NOx sensor 21 is disposed in the exhaust passage portion 3 (exhaust passage) between the DPF 8 and the SCR catalyst 10, and outputs a signal representing NOx concentration in the exhaust gas flowing to the SCR catalyst 10.

The second NOx sensor 22 is disposed at a position downstream of the ammonia slip catalyst 11 in the exhaust passage portion 3 (exhaust passage), and outputs a signal representing the NOx concentration in the exhaust gas passing through the ammonia slip catalyst 11.

Each of the first NOx sensor 21 and the second NOx sensor 22 (hereinafter, it is referred to as an "NOx sensor".) is a laminated structure of a zirconia solid electrolyte. The each NOx sensor is a well-known sensor that comprises two inner spaces (a first space and a second space) and three oxygen pumps. A pair of electrodes are disposed in the first space as a first oxygen pump. The NOx sensors pumps oxygen $O_2$ in the exhaust in and out of the first space by applying adjusted voltage between these electrodes so that combustible gas is burned, and thereby oxygen concentration in the first space is always maintained at a few ppm. Therefore, the NOx sensors can detect the oxygen concentration of the exhaust gas (accordingly, the air-fuel ratio of the exhaust gas) based on an amount of oxygen (oxygen pumping volume) to be pumped in and out of the first space by the first oxygen pump. Further, a second oxygen pump and a metering pump are disposed in the second space which is positioned on the inner side with respect to the first space. The NOx sensors further pumps out oxygen in the exhaust gas by the second oxygen pump and decomposes NOx into $O_2$ and $N_2$. Furthermore, the NOx sensors detects partial pressure of the decomposed $O_2$ by the metering pump. The NOx sensors obtains an output signal which is proportional to NOx concentration in the exhaust based on the detected value of the metering pump.

The heating wire type air flow meter 23 detects the mass flow amount of intake air flowing through the intake passage portion 2 per unit time, and outputs a signal representing the mass flow amount Ga. Noted that, the mass flow amount Ga detected by the heating wire type air flow meter 23 is used to estimate a flow amount of the exhaust gas flowing through the exhaust passage portion 3 (exhaust passage). In this embodiment, an exhaust gas flow amount (flow amount of the exhaust gas) is treated as equal to the mass flow amount Ga.

The crank position sensor 24 outputs a pulse every time a crankshaft (not shown) rotates by 10 degree. The pulse output by the crank position sensor 24 is changed into a signal representing engine speed NE by the electrical control unit 30 described later.

The accelerator opening sensor 25 detects an operation amount of an accelerator pedal 5 operated by a driver, and outputs a signal representing the operation amount Accp of the accelerator pedal 5. The operation amount Accp of the accelerator pedal 5 is one of parameters representing magnitude of load of the engine 1.

The throttle position sensor 26 detects opening degree of the throttle valve 6, and outputs a signal representing throttle valve opening TA.

The electrical control unit 30 is a well-known microcomputer including a CPU 31, a ROM 32, a ROM 33, a backup RAM 34, and an interface 35 including an AD converter or the like. The CPU 31 receives an instruction in accordance with a program stored in the ROM 32, and executes the instruction.

The interface 35 is connected to the sensors 20-26, and supplies the CPU 31 with the signals received from these sensors. Furthermore, the interface 35 sends an instruction signal to the urea water addition valve 9 and a fuel injection valve (not shown) and the like in response to an instruction from the CPU 31. Noted that, the CPU 31 controls amount of fuel injected from the fuel injection valve base on the operation amount Accp of the accelerator pedal 5 and the engine speed NE and the like by a well-known means.

The purifying apparatus selectively carries out one of an equilibrium adsorption amount control and an equivalence ratio control to control an amount of urea water added to a portion upstream of the SCR catalyst. In addition, the purifying apparatus performs "follow-up control (increase correction control) that sets amount of urea water added to an amount which is temporarily increased (an amount larger than an amount of urea water in the subsequent equilibrium adsorption amount control by a predetermined amount" at the time of switching from the equivalence ratio control to the equilibrium adsorption amount control. Whether this follow-up control is carried out or not is determined based on an estimated ammonia adsorption amount (estimated amount of $NH_3$ absorbed on/to the SCR catalyst). Therefore, the purifying apparatus is provided with an adsorption amount estimation part which obtains the estimated ammonia adsorption amount. Therefore, hereinafter, the adsorption amount estimation part, the equilibrium adsorption amount control, the equivalence ratio control, and the follow-up control will be described sequentially. Noted that, when the CPU 31 of the electrical control unit 30 carries out a predetermined routine, function of the adsorption amount estimation part, the equilibrium adsorption amount control, the equivalence ratio control, and the follow-up control are realized.

(The adsorption amount estimation part)

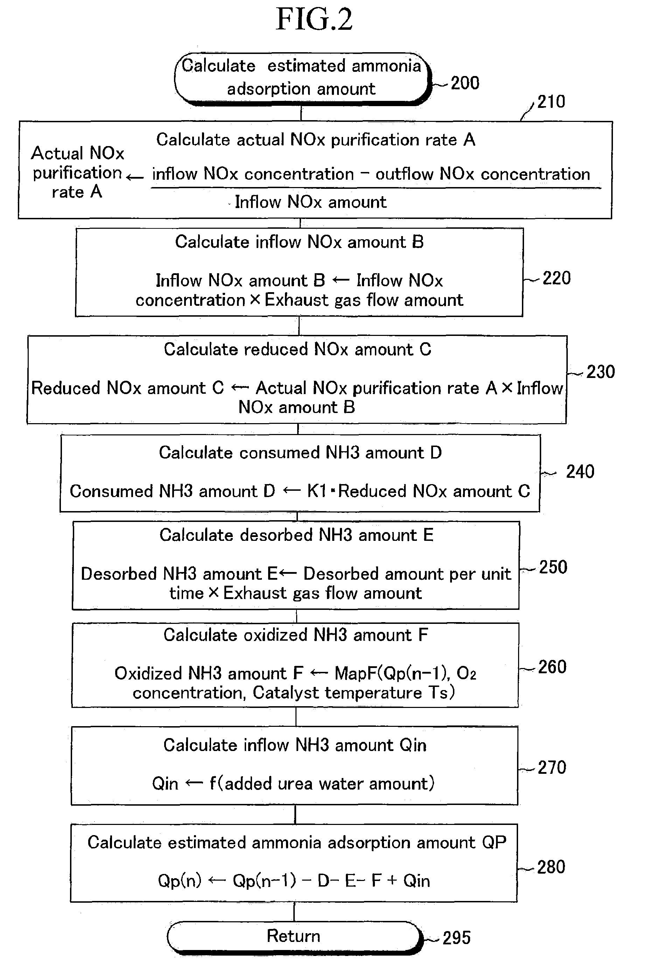

The adsorption amount estimation part obtains an estimated ammonia adsorption amount (estimates amount of $NH_3$ adsorbed on/to the SCR catalyst 10) in accordance with the procedure indicated by the flowchart of FIG. 2. In practice, the CPU 31 executes the routine of FIG. 2 repeatedly at every time when a constant unit time (for example, 1 sec) passes, and thereby the estimated ammonia adsorption amount is obtained.

Step 210: The adsorption amount estimation part calculates an actual NOx purification rate A, which is an actual NOx purification rate of the SCR catalyst 10, based on inflow NOx concentration, which is NOx concentration detected by the first NOx sensor 21, and outflow NOx concentration, which is NOx concentration detected by the second NOx concentration sensor 22. More specifically, the adsorption amount estimation part calculates the actual NOx purification rate A in accordance with the following equation (1).

$$\text{Actual NOx purification rate A} = (\text{Inflow NOx concentration} - \text{Outflow NOx concentration}) / \text{Inflow NOx concentration} \ ... \ (1)$$

Step 220: The adsorption amount estimation part calculates an inflow NOx amount B, which is an amount of NOx flowing to the SCR catalyst 10, in accordance with the following equation (2). Noted that, the exhaust gas flow amount is equal to the mass flow amount Ga detected by the heating wire type air flow meter 23.

$$\text{Inflow NOx amount B} = \text{Inflow NOx concentration} \times \text{Exhaust gas flow amount Ga} \ ... \ (2)$$

Step 230: The adsorption amount estimation part calculates a reduced NOx amount C, which is an amount of NOx reduced in the SCR catalyst 10, in accordance with the following equation (3).

$$\text{Reduced NOx amount C} = \text{Actual NOx purification rate A} \times \text{Inflow NOx amount B} \ ... \ (3)$$

Step 240: The adsorption amount estimation part calculates consumed $NH_3$ amount D, which is an amount of $NH_3$ reducing NOx having the reduced NOx amount C. More specifically, it is assumed that all the NOx having the reduced NOx amount C is reduced by $NH_3$, and the adsorption amount estimation part calculates the consumed $NH_3$ amount D by multiplying the reduced NOx amount C by the constant K1 (for example, K1 = 1).

Step 250: The adsorption amount estimation part calculates a desorbed $NH_3$ amount E, which is an amount of $NH_3$ desorbed from the SCR catalyst 10. More specifically, the adsorption amount estimation part calculates the desorbed $NH_3$ amount E by multiplying an amount of $NH_3$ desorbed from the SCR catalyst 10 without reacting with the NOx in the SCR catalyst 10 per unit time (hereinafter, it is also referred to as a "desorbed amount per unit time e".) by an exhaust gas flow amount. Incidentally, for example, the desorbed amount per unit time e can be calculated by applying a temperature Ts of the SCR catalyst 10 to a look -up table Mape (Ts) obtained by measuring in advance.

Step 260: The adsorption amount estimation part calculates an oxidized $NH_3$ amount F, which is an amount of $NH_3$ that is consumed by being oxidized without reacting with NOx in the SCR catalyst 10. The oxidized $NH_3$ amount F becomes larger, as an amount of $NH_3$ which is adsorbed on/to the SCR catalyst 10 becomes larger, and/or as the oxygen concentration in the exhaust becomes higher, and/or as a temperature Ts of the SCR catalyst 10 become higher. Therefore, the adsorption amount estimation part calculates the oxidized $NH_3$ amount F based on a "previously obtained value of amount of $NH_3$ adsorbed on/to the SCR catalyst 10 (Qp (n-1))" which is calculated at step 280 described later, oxygen concentration detected by the first NOx sensor 21, and a temperature Ts of the SCR catalyst 10. More specifically, the adsorption amount estimation part calculates the oxidized $NH_3$ amount F, for example, by applying the previously obtained estimated ammonia adsorption amount QP (n-1), oxygen concentration, and a temperature Ts of the SCR catalyst 10 to a lookup table MapF (Qp (n-1), oxygen concentration, Ts).

Step 270: On the basis of an added urea water amount, which is an amount of the urea water added to a portion upstream of the SCR catalyst 10 for a period of time between the time when the adsorption amount estimation part carried out this routine last time and current time (i.e., for the unit time), the adsorption amount estimation part calculates an inflow $NH_3$ amount Qin, which is an amount of $NH_3$ produced from urea water by the hydrolysis. Since a specific relationship between an added urea water amount and the inflow $NH_3$ amount Qin is established, the adsorption amount estimation part calculates the inflow $NH_3$ amount Q by applying the added urea water amount to a function f (or, a look-up table ), which is obtained by functionizing the specific relationship and is stored in the ROM 32.

Step 280: The adsorption amount estimation part calculates the present (this time's) estimated ammonia adsorption amount QP (n) based on the previously obtained estimated ammonia adsorption amount QP (n-1), the consumed $NH_3$ amount D, the desorbed $NH_3$ amount E, the oxidized $NH_3$ amount F, the inflow $NH_3$ amount Qin, and the following equation (4). The previously obtained estimated ammonia adsorption amount QP (n-1) is an estimated ammonia adsorption amount QP (n) calculated at the time when the adsorption amount estimation part carried out the routine last time. Namely, the previously obtained estimated ammonia adsorption amount QP (n-1) is a previously obtained value of the estimated ammonia adsorption amount QP (n).

$$\text{Estimated ammonia adsorption amount QP (n) = Qp (n-1) -D-E-F + Qin} \ldots (4)$$

By the above steps, the estimated ammonia adsorption amount QP (n) is calculated and updated.

(Abstract of the equilibrium adsorption amount control)

Subsequently, "equilibrium adsorption amount control", which is one mode of the controls of the urea water amount and is carried out by the purifying apparatus, will be explained. The equilibrium adsorption amount control is carried out when a temperature Ts of the SCR catalyst 10 is less than a prescribed temperature Tsth. Note that, the prescribed temperature Tsth is set at a temperature (for example, 350°C) at and above which an ammonia occluding capacity (saturated adsorption amount) largely decreases (becomes small) since a temperature of the SCR catalyst 10 becomes excessively high.

The equilibrium adsorption amount control is a control to adjust an urea water amount so that an amount of $NH_3$ adsorbed on/to the SCR catalyst 10 is maintained at a predetermined target adsorption amount in a state in which "an amount of the $NH_3$ to be adsorbed on/to the SCR catalyst 10 per unit time" ,"an amount of the $NH_3$ to be desorbed from the SCR catalyst 10 per unit time", and "an amount of the $NH_3$ to be consumed (by being oxidized to be NOx which becomes $N_2$ by reacting with surplus $NH_3$) per unit time" are balanced. It should be noted that the state in which "the amount of the $NH_3$ adsorbed to the SCR catalyst 10 per unit time" and "the amount of the $NH_3$ desorbed from the SCR catalyst 10 per unit time" are balanced may be simply referred to as "equilibrium state". Furthermore, the amount of the $NH_3$ adsorbed to the SCR catalyst 10 in the equilibrium state may be simply referred to as "equilibrium adsorption amount". Therefore, the equilibrium adsorption amount control is a control to make the urea water addition valve 9 inject urea water having a necessary amount for producing ammonia which has an amount for maintaining the equilibrium adsorption amount at the predetermined target adsorption amount. It should be noted that the "target adsorption amount" is an equilibrium adsorption amount lower than the saturated adsorption amount, which is an upper limit of $NH_3$ absorption amount of the SCR catalyst 10.

The purifying apparatus carries out the equilibrium adsorption amount control in accordance with the following procedure.

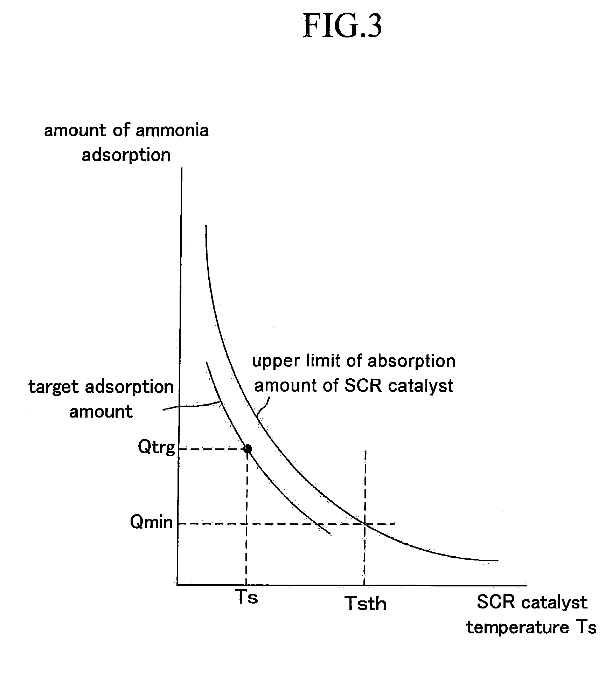

(1) The purifying apparatus sets the target adsorption amount Qtrg at a predetermined value (for example, a constant value less than the upper limit of $NH_3$ absorption amount of the SCR catalyst 10). However, the purifying apparatus may determine the target adsorption amount Qtrg based on a temperature Ts of the SCR catalyst 10 and the relationship shown in FIG. 3. In this case, as shown in FIG.3, the target adsorption amount Qtrg is set at an amount less than the upper limit of $NH_3$ absorption amount of the SCR catalyst 10 by a predetermined amount. Namely, the target adsorption amount Qtrg may be set so as to be smaller as a temperature Ts of the SCR catalyst 10 becomes higher.

(2) The purifying apparatus obtains the inflow NOx amount B (= B ') calculated by the adsorption amount estimation part (see step 220).

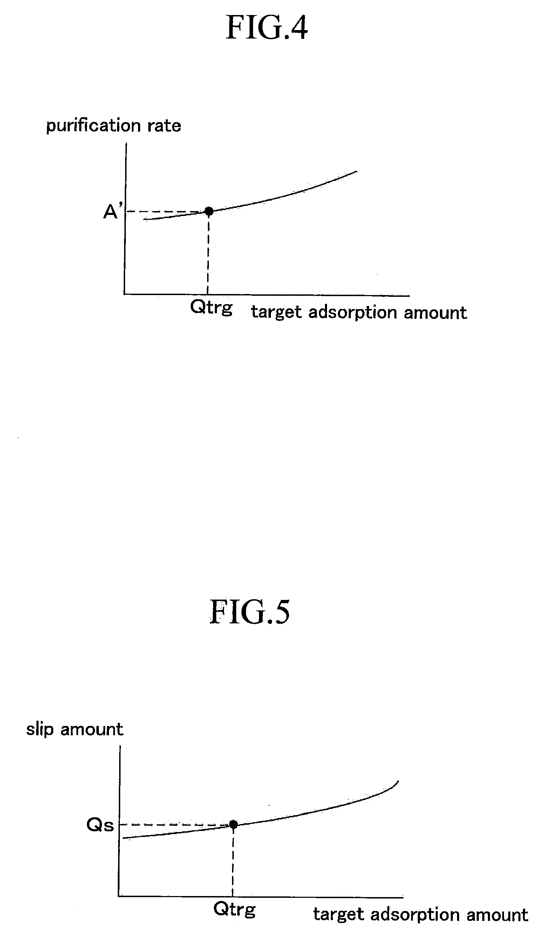

(3) The purifying apparatus obtains purification rate A' with respect to the target adsorption amount Qtrg based on the relationship between the target adsorption amount Qtrg shown in FIG. 4 and purification rate A' (NOx purification rate of the SCR catalyst 10). Since an adsorption amount of $NH_3$ in the SCR catalyst 10 becomes larger as the target adsorption amount becomes larger, the purification rate A' becomes larger as the target adsorption amount becomes larger. Therefore , the purifying apparatus obtains the purification rate A' by applying the target adsorption amount Qtrg to a look-up table MapA (Qtrg), which represents this relationship and is obtained by measuring in advance. Noted that, when the target adsorption amount Qtrg is constant value, the purifying apparatus obtains the purification rate A' as a constant value without performing calculation.

(4) The purifying apparatus calculates reduced NOx amount C' corresponding to the target adsorption amount Qtrg by multiplying the purification rate A' by the inflow NOx amount B' (C' = A' x B').

(5) The purifying apparatus calculates an consumed $NH_3$ amount D' by multiplying the reduced NOx amount C' by the constant K1 (for example, K1 = 1).

(6) Based on the relationship between the target adsorption amount shown in FIG. 5 and "an amount of $NH_3$ desorbed from the SCR catalyst 10 without reacting with the NOx in the SCR catalyst 10 per unit time (hereinafter, it is simply referred to as "slip amount Qs".)", the purifying apparatus obtains (calculates) the slip amount Qs corresponding to the target adsorption amount Qtrg. This relationship is also stored in the ROM 32 as a look-up table in advance. Since an amount of $NH_3$ desorbed from the SCR catalyst 10 increases as the target adsorption Qtrg becomes larger, as shown in FIG. 5, the slip amount Qs becomes larger as the target adsorption amount becomes larger.

(7) The purifying apparatus determines a necessary supply $NH_3$ amount X so that a $NH_3$ amount X which has to be supplied to the SCR catalyst 10 per unit time (a necessary supply $NH_3$ amount X) becomes equal to a total value which is obtained by adding the consumed $NH_3$ amount D 'and the slip amount Qs (i.e., so that the following equation (5) is satisfied).

$$\text{Necessary supply } NH_3 \text{ amount X= Consumed } NH_3 \text{ amount D'+ Slip amount Qs ... (5)}$$

(8) The purifying apparatus calculates an urea water amount Y, which is necessary for supplying or producing the necessary supply $NH_3$ amount X using a "look -up table Y = Map (X)". Incidentally, the relationship between the amount Y of urea water supplied to the portion upstream of the SCR catalyst 10 and the amount X of $NH_3$, which is produced from urea included in this urea water by hydrolyzing this urea and is supplied to the SCR catalyst 10, was determined by an experiment in advance. This relationship is also stored in the ROM 32 in the form of the lookup table (Y = Map (X)).

(9) The purifying apparatus injects and supplies urea water having the urea water amount Y from the urea water addition valve 9.

In the equilibrium adsorption amount control, based on the assumption that an amount of $NH_3$ adsorbed on/to the SCR catalyst 10 is equal to the target adsorption amount Qtrg, and the $NH_3$ amount X to be supplied to the SCR catalyst 10 (the necessary supply $NH_3$ amount X) is determined. For this reason, when the actual amount of the $NH_3$ adsorbed on/to the SCR catalyst 10 (i.e., an actual ammonia adsorption amount) is larger than the target adsorption amount Qtrg, an amount of $NH_3$ desorbed from the SCR catalyst 10 is larger than an amount of $NH_3$ absorbed on/to the SCR catalyst 10. Therefore, if continuing the equilibrium adsorption amount control, an actual ammonia adsorption amount reaches the target adsorption amount Qtrg. On the other hand, when an actual ammonia adsorption amount is smaller than the target adsorption amount Qtrg, an amount of $NH_3$ absorbed on/to the SCR catalyst 10 is larger than an amount of $NH_3$ desorbed from the SCR catalyst 10. Therefore, if continuing the equilibrium adsorption amount control, an actual ammonia adsorption amount reaches the target adsorption amount Qtrg.

In this way, in the equilibrium adsorption amount control, urea water is added from the urea water addition valve 9 so that an actual ammonia adsorption amount reaches the target adsorption amount and is kept to be equal to the target adsorption amount. As a result, it is possible to purify NOx in the exhaust gas in/on the SCR catalyst 10 stably. However, when a temperature Ts of the SCR catalyst 10 is a high temperature, desorption of $NH_3$ from the SCR catalyst 10 increases. For this reason, shown in an area where a temperature Ts is equal to or higher than the prescribed temperature Tsth in FIG. 3, even when the target adsorption amount Qtrg is set to a minimum target adsorption amount Qmin, it becomes impossible to maintain an actual ammonia adsorption amount in/on the SCR catalyst 10 at the target adsorption amount Qtrg. Therefore, when a temperature Ts of the SCR catalyst 10 is a high temperature equal to or higher than the prescribed temperature Tsth, the purifying apparatus carries out the equivalence ratio control to be described next in place of the equilibrium adsorption amount control. Incidentally, the prescribed temperature Tsth may be set at a temperature Ts of the SCR catalyst 10 when the upper limit of $NH_3$ absorption amount of the SCR catalyst 10 is larger than the minimum target adsorption amount Qmin by a predetermined amount.

(Abstract of the equivalence ratio control)

As mentioned above, the equivalence ratio control is carried out when temperature Ts of the SCR catalyst 10 is equal to or higher than the prescribed temperature Tsth. In the equivalence ratio control, the purifying apparatus adjusts a urea water amount such that a ratio of the amount of $NH_3$ supplied to the SCR catalyst 10 to the necessary reduction $NH_3$ amount (i.e., equivalence ratio) is equal to 1 (one). The necessary reduction $NH_3$ amount is a NOx amount, which flows to the SCR catalyst 10 and has to be reduced (purified) in/on the SCR catalyst 10. Namely, in the equivalence ratio control, the urea injection valve 9 injects urea water having a necessary amount for producing ammonia, which has an amount for making "equivalence ratio" of "ammonia supplied to the SCR catalyst 10" to "NOx that need to be selectively reduced in/on the SCR catalyst 10" equal to 1 (one).

More specifically, the purifying apparatus carries out the equivalence ratio control in accordance with the following procedure.

(1) The purifying apparatus obtains the inflow NOx amount B calculated by the adsorption amount estimation part (see step 220) as the necessary reduction $NH_3$ amount X.
(2) The purifying apparatus calculates the $NH_3$ amount (i.e., the necessary supply $NH_3$ amount X), which makes equivalence ratio (of ammonia amount) to NOx having the necessary reduction $NH_3$ amount become equal to 1.
(3) The purifying apparatus calculates the amount Y of urea water necessary for supplying or producing $NH_3$, which has the necessary supply $NH_3$ amount X, using the aforementioned look-up table Y = Map (X).
(4) The purifying apparatus injects and supplies urea water having the urea water amount Y from the urea water addition valve 9.

According to this equivalence ratio control, NH 3, whose amount (i.e., the $NH_3$ amount which makes the equivalence ratio become equal to 1) is without excess and deficiency to reduce NOx having the necessary reduction $NH_3$ amount, is supplied to the SCR catalyst 10. Therefore, it is possible to purify NOx with a high purification efficiency, even when a temperature Ts of the SCR catalyst 10 becomes equal to or higher than the prescribed temperature Tsth, and thereby an adsorption amount of NH 3 decreases. Furthermore, it is possible to reduce a possibility that ammonia slip occurs.

(Abstract of the follow-up control)

By the way, when a temperature Ts of the SCR catalyst 10 becomes equal to or higher than the prescribed temperature Tsth, and thereby temperature Ts of the SCR catalyst 10 becomes lower than the prescribed temperature Tsth in the case where the equivalence ratio control is carried out, the purifying apparatus switches the control of urea water amount from the equivalence ratio control to the equilibrium adsorption amount control.

On the other hand, as mentioned above, when the equivalence ratio control is carried out (Namely, when a temperature Ts of the SCR catalyst 10 is a high temperature equal to or higher than the prescribed temperature Tsth), since desorption of $NH_3$ from the SCR catalyst 10 is progressed, an actual ammonia adsorption amount becomes considerably small. Therefore, at the time of switching the control mode from the equivalence ratio control to the equilibrium adsorption amount control, an actual ammonia adsorption amount is largely different from the target adsorption amount in equilibrium adsorption amount control. On the other hand, in the equilibrium adsorption amount control, urea water amount is determined on the assumption that an actual ammonia adsorption amount in/on the SCR catalyst 10 is near the target adsorption amount (an actual ammonia adsorption amount is substantially equal to the target adsorption amount). For this reason, in the case where the difference between an actual ammonia adsorption amount and the target adsorption amount is large, if continuing only the equilibrium adsorption amount control, it takes a long time to make an actual ammonia adsorption amount reach the target adsorption amount. Therefore, the purifying apparatus carries out the "follow-up control" immediately after switching the control mode of urea water amount from the equivalence ratio control to the equilibrium adsorption amount control, and thereby brings an actual ammonia adsorption amount close to the target adsorption amount quickly.

More specifically, the purifying apparatus calculates an ammonia amount Qa equal to the difference between an assumed amount of ammonia adsorption Qp (see step 280), which is estimated by the adsorption amount estimation part described above, and the target adsorption amount Qtrg of $NH_3$ in the equilibrium adsorption amount control (= Qtrg-Qp). Hereinafter, this ammonia amount Qa will be referred to as a shortage amount of adsorption Qa. When a shortage amount of adsorption Qa is equal to or larger than a predetermined threshold (constant value) DQth, the purifying apparatus determines the amount Yb of added urea water by using the look-up table Y = Map (X) so that $NH_3$

having a basic addition amount of Qb (= X) in the equilibrium adsorption amount control is supplied to the SCR catalyst 10, and injects and supplies the urea water having an amount, which is larger than the determined amount Yb by a constant amount Yad, from the urea water addition valve 9, until the assumed amount of ammonia adsorption Qp becomes equal to (or substantially equal to) the target adsorption amount Qtrg (in other words, until the shortage amount of adsorption Qa (= Qtrg-Qp) becomes "0" or smaller than the threshold DQth). Noted that, the amount Yad may be changed depending on a temperature Ts of the SCR catalyst 10.

In addition, when the shortage amount of adsorption Qa is equal to or larger than the predetermined threshold (constant value) DQth, the purifying apparatus may determine the amount Y of added urea water by using the look-up table Y = Map (X) so that $NH_3$ having an amount, which is obtained by adding a constant amount (fixed amount) Qad to the basic addition amount of Qb in the equilibrium adsorption amount control (=Qb + Qad = X), is supplied to the SCR catalyst 10, and may inject and supply the urea water having the determined amount from the urea water addition valve 9, until the assumed amount of ammonia adsorption until Qp becomes equal to (or substantially equal to) the target adsorption amount Qtrg. Also in this case, the amount Qad may be changed depending on a temperature Ts of the SCR catalyst 10.

According to the follow-up control, even when the equivalence ratio control is switched to the equilibrium adsorption amount control (i.e., even when the difference between an actual ammonia adsorption amount in/on the SCR catalyst 10 and the target adsorption amount Qtrg is large), it is possible to make an actual ammonia adsorption amount reach the target adsorption amount Qtrg quickly. As a result, it is possible to make a state of the SCR catalyst 10 reach desired equilibrium state quickly.

(Actual Operation of the purifying apparatus)

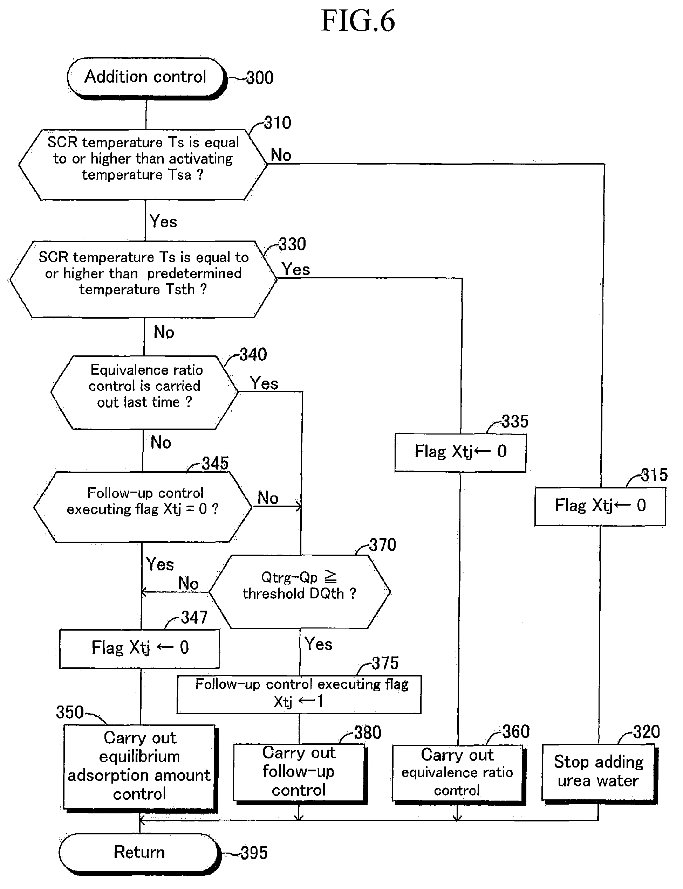

Next, a description will be given of the actual operation of the purifying apparatus. The CPU 31, which is provided in the electrical control unit 30 of the purifying apparatus, carries out an addition control routine shown by the flowchart of FIG. 6 at every time when a predetermined time passes after the engine 1 is started. Accordingly , the CPU 31 starts processes from step 300 at a predetermined time and proceeds to step 310 to determine whether a temperature Ts of the SCR catalyst 10 is equal to or higher than an activating temperature Tsa (e.g., 180 °C) or not.

Immediately after the engine is started, usually, a temperature Ts of the SCR catalyst 10 is less than the activating temperature Tsa. Therefore, the CPU 31 determines "No" at step 310 and proceeds to step 315 to set the value of a follow-up control executing flag Xtj to "0". The follow-up control executing flag Xtj shows that the follow-up control is being carried out when its value is "1", on the other hand, shows that the follow-up control is not being carried out when its value is "0". A value of the follow-up control executing flag Xtj is also set to "0" in the initial routine which is carried out when an ignition key switch (not shown) is changed from OFF to ON. Furthermore, a value of the follow-up control executing flag Xtj is also set to "0" at steps 335 and 347 described later, and is set to "1" at step 375 described later. Subsequently, the CPU 31 proceeds to step 320 to stop adding (injecting and supplying) urea water from the urea water addition valve 9. Then, the CPU 31 proceeds to step 395 and temporarily ends the routine.

Then, when the engine 1 continues the operation (rotation), a temperature Ts of the SCR catalyst 10 is equal to or higher than the activating temperature Tsa. In this case , when proceeding to step 310, the CPU 31 determines "Yes" at step 310, and proceeds to step 330 to determine whether a temperature Ts of the SCR catalyst 10 is equal to or higher than the above predetermined temperature Tsth (e.g. 350 °C) or not.

Immediately after a temperature Ts of the SCR catalyst 10 becomes equal to or higher than the activating temperature Tsa, a temperature Ts is lower than the prescribed temperature Tsth. Accordingly, the CPU 31 determines "No" at step 330, and proceeds to step 340 to determine whether the equivalence ratio control was being carried out at the time of carrying out the routine last time.

At this stage, since urea water was not added at the time of carrying out the routine last time, the equivalence ratio control was not carried out. Accordingly, the CPU 31 determines "No" at step 340, and proceeds to step 345 to determine whether a value of the follow-up control executing flag Xtj is "0" or not.

At this stage, a value of the follow-up control executing flag Xtj is "0". Accordingly, the CPU 31 determines "Yes" at step 345, and proceeds to step 347 to set a value of the follow-up control executing flag Xtj to "0". Noted that, since a value of the follow-up control executing flag Xtj is "0" at this stage, the processing of this step is carried out for confirmation. Subsequently, the CPU 31 proceeds to step 350 to carry out the equilibrium adsorption amount control described above. Thereafter, the CPU 31 proceeds to step 395 and temporarily ends the routine.

Moreover, when the engine 1 continues the operation (rotation) and thereby, for example, the load of the engine 1 is continuously high value, there is a case where a temperature Ts of the SCR catalyst 10 becomes equal to or higher than the prescribed temperature Tsth. In this case, when proceeding to step 330, the CPU 31 determines "Yes" at step 330, and proceeds to step 335 to set a value of follow-up control executing flag Xtj to "0". Next, the CPU 31 proceeds to step 360 to carry out the equivalence ratio control described above. Thereafter, the CPU 31 proceeds to step 395 and temporarily ends the routine.

In a state in which the equivalence ratio control is carried out, when, for example, the load of the engine 1 is continuously low value, a temperature Ts of the SCR catalyst 10 is lower than the prescribed temperature Tsth. In this case, when proceeding to step 330, the CPU 31 determines "No" at step 330. Then, the CPU 31 proceeds to step 340.

At this stage, the equivalence ratio control was carried out at the time of carrying out the routine last time. Therefore, the CPU 31 determines "Yes" at step 340, and proceeds to step 370 to determine whether the shortage amount of ammonia adsorption Qa, which is the difference between the target adsorption amount Qtrg and the assumed amount of ammonia adsorption Qp, is equal to or higher than the threshold DQth or not. This threshold DQth is set to a very large value. Namely, when the control mode is switched to the equilibrium adsorption amount control in the case where the difference (separation) between the assumed amount of ammonia adsorption Qp and the target adsorption amount Qtrg is equal to the threshold DQth, an actual ammonia adsorption amount cannot reach the target adsorption amount Qtrg quickly.

When the shortage amount of ammonia adsorption Qa is less than the threshold DQth, the CPU 31 determines "No" at step 370, and proceeds to step 347 to set the value of the follow-up control executing flag Xtj to "0". Then, the CPU 31 proceeds to step 350 to carry out the equilibrium adsorption amount control described above. Thereafter, the CPU 31 proceeds to step 395 and temporarily ends the routine.

In contrast, when the shortage amount of ammonia adsorption Qa is equal to or larger than the threshold DQth, the CPU 31 determines "Yes" at step 370, and proceeds to step 375 to set the value of the follow-up control executing flag Xtj to "1". Then, the CPU 31 proceeds to step 380 to carry out the follow-up control mentioned above. In other words, the CPU 31 make the urea water addition valve 9 inject and supply urea water having an amount, which is obtained by adding a predetermined amount Qad to the urea water amount at which ammonia having the basic addition amount Qb in the equilibrium adsorption amount control is supplied or produced. Then, the CPU 31 proceeds to step 395 and temporarily ends the routine.

Subsequently, when starting processing the routine, the CPU 31 determines "Yes" at step 310, "No" at step 330, "No" at step 340, and proceeds to step 345. At this stage, since the value of the follow-up control executing flag Xtj is set to "1", the CPU 31 determines "No" at step 345 and proceeds to step 370. Then, when the shortage amount of ammonia adsorption Qa is equal to or larger than the threshold DQth, the CPU 31 proceeds to steps 375 and 380 to continue the follow-up control described above. On the other hand, when the shortage amount of ammonia adsorption Qa is less than the threshold DQth, the CPU 31 proceeds to steps 347 and 350 to resume the equilibrium adsorption amount control described above. In this way, the follow-up control is continued until the shortage amount of ammonia adsorption Qa becomes less than the threshold DQth, after the execution condition of the equilibrium adsorption amount control (Ts<Tsth) is satisfied in a state where the equivalence ratio control is carried out.

As described above, the purifying apparatus comprises:

the selective reduction type NOx catalyst 10 disposed in an exhaust passage (the exhaust passage portion 3) and selectively reducing NOx in exhaust gas with ammonia;
the adding device 9 for adding urea water to a portion upstream of the selective reduction type NOx catalyst in the exhaust passage;
the adsorption amount estimation part (the routine of FIG.2, 30) for estimating the estimated adsorption amount (Qp) of ammonia adsorbed to the selective reduction type NOx catalyst based on at least the amount (Qin) of ammonia supplied to the selective reduction type NOx catalyst and another amount (D) of ammonia consumed in the selective reduction type NOx catalyst by reacting with NOx; and
the addition control part (30) for carrying out an equivalence ratio control when temperature Ts of the selective reduction type NOx catalyst is equal to or higher than a predetermined temperature Tsth (steps 330, 360), and carrying out an equilibrium adsorption amount control when the temperature Ts of the selective reduction type NOx catalyst is lower than the predetermined temperature Tsth (steps 330, 350).

The equivalence ratio control is a control to make the adding device add the urea water having a necessary amount for producing ammonia, which has an amount for making an equivalence ratio of the ammonia to the NOx that needs to be selectively reduced in the selective reduction type NOx catalyst equal to 1.

The equilibrium adsorption amount control is a control to make the adding device add the urea water having a necessary amount (Yb) for producing ammonia, that has an amount for maintaining an equilibrium adsorption amount, which is an adsorption amount of ammonia in the selective reduction type NOx catalyst when adsorption of ammonia and desorption of ammonia are in an equilibrium state in the selective reduction type NOx catalyst, at a predetermined target adsorption amount (Qtrg).

Furthermore, the addition control part is configured to make the adding device add the urea water having a specific amount obtained by adding the urea water amount (Yb), which is necessary for the equilibrium adsorption amount control, to a predetermined amount (Yad), in a case where a difference (=the shortage amount of adsorption Qa) between the target adsorption amount (Qtrg) and the estimated adsorption amount (Qp) of ammonia is equal to or larger than a predetermined threshold (DQth) when a temperature Ts of the selective reduction type NOx catalyst changes from a temperature equal to or higher than the predetermined temperature Tsth to a temperature lower than the predetermined temperature Tsth (30, steps 330, 340 ,370 ,380).

Therefore, when the difference between the target adsorption amount Qtrg of the ammonia in/on the SCR catalyst 10 and an actual ammonia adsorption amount at the time of changing the equivalence ratio control to the equilibrium adsorption amount control, it is possible to quickly bring an actual amount of ammonia adsorption close to the target adsorption amount Qtrg. As a result, it is possible to purify the NOx stably.

The present invention is not limited to the above embodiment, and it is possible to adopt various modifications within the scope of this invention. For example, the adsorption amount estimation part may comprise a look -up table for obtaining (estimating) an "estimated ammonia adsorption amount" based on an operation state of the internal combustion engine. This look-up table may be obtained in advance by simulation or experiment or the like, and may be stored in the ROM 32.

In the above embodiment, the purifying apparatus is applied to a diesel engine. However, the purifying apparatus can be applied to a gasoline engine.

Furthermore, the purifying apparatus carries out the follow-up control when the equivalence ratio control is switched to the equilibrium adsorption amount control, however, the timing for carrying out the follow-up control is not limited to this timing. For example, the purifying apparatus may be configured to carry out the follow-up control at the time when temperature of the SCR catalyst is equal to or higher than the activation temperature after the engine is started and before the equilibrium adsorption amount control is executed.

Furthermore, in the purifying apparatus, the oxidation catalyst and the DPF are separately formed. However, the oxidation catalyst and the DPF may be integrally formed so that the DPF has an oxidation function.

Furthermore, in the purifying apparatus, the exhaust gas temperature sensor is arranged at a portion upstream of the SCR catalyst and this exhaust gas temperature sensor estimates a temperature of the SCR catalyst. However, the exhaust gas temperature sensor may be disposed on the SCR catalyst or a portion downstream of the SCR catalyst in the exhaust passage, and may estimate a temperature of the SCR catalyst. Further, the ammonia slip catalyst 11 may be omitted from the purifying apparatus.

In addition, the purifying apparatus may be configured to change the equivalence ratio to a value different from "1" in the equivalence ratio control, when an abnormal situation occurs (for example, when a remaining amount of urea water in a tank for urea water is a small amount and/or an amount of NOx discharged from the SCR catalyst 10 becomes a large amount). More specifically, the purifying apparatus may decreases an amount of urea water injected from the urea injection valve 9 so that a ratio of the amount of $NH_3$ supplied to the SCR catalyst 10 to the necessary reduction $NH_3$ amount X(equivalence ratio) becomes smaller than "1" in order to decrease a consumption amount of urea water per time, when the remaining amount of the in the tank for urea water is small. Further, for example, the purifying apparatus may increases an amount of urea water injected from the urea injection valve 9 so that a ratio of the amount of $NH_3$ supplied to the SCR catalyst 10 to the necessary reduction $NH_3$ amount X (equivalence ratio) becomes larger than "1" in order to increase the NOx purification rate of the SCR catalyst 10, when an amount of NOx discharged from the SCR catalyst 10 becomes a large amount.

Furthermore, in the above embodiment, when determining "No" at step 345 of FIG. 6, the purifying apparatus determines whether the purifying apparatus should continue the follow-up control or not by determining whether the shortage amount of ammonia adsorption Qa is equal to or larger than the threshold DQth at step 375. In contrast, the purifying apparatus may determine whether the shortage amount of ammonia adsorption Qa becomes equal to "0" (i.e., the assumed amount of ammonia adsorption Qp becomes equal to the target adsorption amount Qtrg) or not, when determining "No" at step 345 of FIG. 6. In this case, when the shortage amount of ammonia adsorption Qa does not become equal to "0", the purifying apparatus may proceed to steps 375 and 380 to continue the follow-up control. On the other hand, when the shortage amount of ammonia adsorption Qa becomes equal to "0", the purifying apparatus may proceed to steps 347 and 350 to finish the follow-up control and resume the equilibrium adsorption amount control.

Furthermore, when determining "No" at step 345 of FIG. 6, the purifying apparatus determines whether the shortage amount of ammonia adsorption Qa becomes less than " a finishing threshold DQsth which is a positive value and smaller than the threshold DQth". In this case, when the shortage amount of ammonia adsorption Qa does not become smaller than the finishing threshold DQsth, the purifying apparatus may proceed to steps 375 and 380 to continue the follow-up control. On the other hand, when the shortage amount of ammonia adsorption Qa becomes smaller than the finishing threshold DQsth, the purifying apparatus may proceed to steps 347 and 350 to finish the follow-up control and resume the equilibrium adsorption amount control.

Namely, the addition control part may be configured to make the adding device add the urea water having the specific amount until the difference (=the shortage amount of adsorption Qa) becomes less than a positive value equal to or less than the predetermined threshold DQth or becomes equal to 0, when the temperature of the selective reduction type NOx catalyst is changed from a temperature equal to or higher than the predetermined temperature to a temperature lower than the predetermined temperature. As a result, it is possible to bring an actual ammonia adsorption amount close to the target adsorption amount Qtrg more quickly.

**Claims**

1. An exhaust gas purifying apparatus for internal combustion engine applied to an internal combustion engine (1), which has a selective reduction type NOx catalyst (10) disposed in an exhaust passage (3) and selectively reducing NOx in exhaust gas with ammonia ($NH_3$), and an adding device (9) for adding urea water to a portion upstream of said selective reduction type NOx catalyst (10) in said exhaust passage to supply said selective reduction type NOx catalyst (10) with said ammonia ($NH_3$) obtained by hydrolyzing urea, said exhaust gas purifying apparatus for internal combustion engine comprising:

   an adsorption amount estimation part (30) for estimating an estimated adsorption amount (Qp) of ammonia ($NH_3$) adsorbed to said selective reduction type NOx catalyst based on an amount (Qin) of ammonia ($NH_3$) supplied to said selective reduction type NOx catalyst and another amount (D) of ammonia ($NH_3$) consumed in said selective reduction type NOx catalyst by reacting with NOx; and
   an addition control part (30) for carrying out an equivalence ratio control when temperature (Ts) of said selective reduction type NOx catalyst (10) is equal to or higher than a predetermined temperature (Tsth), and carrying out an equilibrium adsorption amount control when said temperature (Ts) of said selective reduction type NOx catalyst (10) is lower than said predetermined temperature (Tsth),

   wherein,
   said equivalence ratio control is a control to make said adding device (9) add said urea water having a necessary amount for producing ammonia ($NH_3$), which has an amount for making an equivalence ratio of said ammonia ($NH_3$) to said NOx that needs to be selectively reduced in said selective reduction type NOx catalyst equal to 1,
   said equilibrium adsorption amount control is a control to make said adding device (9) add said urea water having a necessary amount (Yb) for producing ammonia ($NH_3$), that has an amount for maintaining an equilibrium adsorption amount, which is an adsorption amount of ammonia ($NH_3$) in said selective reduction type NOx catalyst (10) when adsorption of ammonia ($NH_3$) and desorption of ammonia ($NH_3$) are in an equilibrium state in said selective reduction type NOx catalyst (10), at a predetermined target adsorption amount (Qtrg), and
   said addition control part (30) is configured to make said adding device (9) add said urea water having a specific amount obtained by adding said urea water amount (Yb), which is necessary for said equilibrium adsorption amount control, to a predetermined amount (Yad), in a case where a difference (Qa) between said target adsorption amount (Qtrg) and said estimated adsorption amount (Qp) of ammonia is equal to or larger than a predetermined threshold (DQth) when a temperature (Ts) of said selective reduction type NOx catalyst changes from a temperature equal to or higher than said predetermined temperature (Tsth) to a temperature lower than said predetermined temperature (Tsth).

2. The exhaust gas purifying apparatus for internal combustion engine according to claim 1, wherein,
   said addition control part (30) is configured to make said adding device (9) add said urea water having said specific amount until said difference becomes less than a positive value equal to or less than said predetermined threshold (DQth) or becomes equal to 0, when said temperature (Ts) of said selective reduction type NOx catalyst changes from said temperature equal to or higher than said predetermined temperature (Tsth) to said temperature lower than said predetermined temperature (Tsth).

# FIG.1

# FIG.2

$$\text{Calculate estimated ammonia adsorption amount} \sim 200$$

**Calculate actual NOx purification rate A**

$$\text{Actual NOx purification rate A} \leftarrow \frac{\text{inflow NOx concentration} - \text{outflow NOx concentration}}{\text{Inflow NOx amount}}$$

$\sim 210$

**Calculate inflow NOx amount B**

$$\text{Inflow NOx amount B} \leftarrow \text{Inflow NOx concentration} \times \text{Exhaust gas flow amount}$$

$\sim 220$

**Calculate reduced NOx amount C**

$$\text{Reduced NOx amount C} \leftarrow \text{Actual NOx purification rate A} \times \text{Inflow NOx amount B}$$

$\sim 230$

**Calculate consumed NH3 amount D**

$$\text{Consumed NH3 amount D} \leftarrow K1 \cdot \text{Reduced NOx amount C}$$

$\sim 240$

**Calculate desorbed NH3 amount E**

$$\text{Desorbed NH3 amount E} \leftarrow \text{Desorbed amount per unit time} \times \text{Exhaust gas flow amount}$$

$\sim 250$

**Calculate oxidized NH3 amount F**

$$\text{Oxidized NH3 amount F} \leftarrow \text{MapF}(Qp(n-1), O_2 \text{ concentration}, \text{Catalyst temperature Ts})$$

$\sim 260$

**Calculate inflow NH3 amount Qin**

$$Qin \leftarrow f(\text{added urea water amount})$$

$\sim 270$

**Calculate estimated ammonia adsorption amount QP**

$$Qp(n) \leftarrow Qp(n-1) - D - E - F + Qin$$

$\sim 280$

$$\text{Return} \sim 295$$

# FIG.3

# FIG.4

purification rate

A'

Qtrg   target adsorption amount

# FIG.5

slip amount

Qs

Qtrg   target adsorption amount

# FIG.6

Addition control —300

SCR temperature Ts is equal to or higher than activating temperature Tsa ? —310

No

Yes

SCR temperature Ts is equal to or higher than predetermined temperature Tsth ? —330

Yes

No

Equivalence ratio control is carried out last time ? —340

Yes

No

Flag Xtj← 0 —335

Follow-up control executing flag Xtj = 0 ? —345

No

Flag Xtj← 0 —315

Yes

Qtrg-Qp ≧ threshold DQth ? —370

No

Flag Xtj ← 0 —347

Yes

Follow-up control executing flag Xtj ←1 —375

Carry out equilibrium adsorption amount control —350

Carry out follow-up control —380

Carry out equivalence ratio control —360

Stop adding urea water —320

Return —395

Europäisches
Patentamt

European
Patent Office

Office européen
des brevets

# EUROPEAN SEARCH REPORT

Application Number

EP 16 18 3438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 2 868 884 A1 (TOYOTA MOTOR CO LTD [JP]) 6 May 2015 (2015-05-06) * paragraphs [0045], [0056] - [0059] * * figures 2,4 * | 1,2 | INV. F01N3/021 F01N3/10 F01N3/20 |
| A,D | JP 2009 270449 A (MITSUBISHI FUSO TRUCK & BUS) 19 November 2009 (2009-11-19) * abstract * * paragraphs [0011] - [0015], [0021] - [0023] * | 1,2 | |
| A | JP 2009 293606 A (HINO MOTORS LTD) 17 December 2009 (2009-12-17) * paragraphs [0032], [0033], [0036] - [0042] * * figure 5 * | 1,2 | |
| A | EP 1 106 799 A1 (TOYOTA MOTOR CO LTD [JP]) 13 June 2001 (2001-06-13) * paragraphs [0016] - [0020] * * figure 2 * | 1,2 | |
| A | EP 2 570 626 A1 (TOYOTA MOTOR CO LTD [JP]) 20 March 2013 (2013-03-20) * paragraphs [0019] - [0021] * * claims 1,4,5 * * figure 1 * | 1,2 | TECHNICAL FIELDS SEARCHED (IPC) F01N |

The present search report has been drawn up for all claims

| Place of search | Date of completion of the search | Examiner |
|---|---|---|
| Munich | 19 January 2017 | Ikas, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 3438

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2017

| Patent document cited in search report | | Publication date | Patent family member(s) | | Publication date |
|---|---|---|---|---|---|
| EP 2868884 | A1 | 06-05-2015 | CN | 104395571 A | 04-03-2015 |
| | | | EP | 2868884 A1 | 06-05-2015 |
| | | | JP | 5900617 B2 | 06-04-2016 |
| | | | JP | WO2013190658 A1 | 08-02-2016 |
| | | | US | 2015192047 A1 | 09-07-2015 |
| | | | WO | 2013190658 A1 | 27-12-2013 |
| JP 2009270449 | A | 19-11-2009 | JP | 5054607 B2 | 24-10-2012 |
| | | | JP | 2009270449 A | 19-11-2009 |
| JP 2009293606 | A | 17-12-2009 | JP | 5127052 B2 | 23-01-2013 |
| | | | JP | 2009293606 A | 17-12-2009 |
| EP 1106799 | A1 | 13-06-2001 | CN | 1306601 A | 01-08-2001 |
| | | | DE | 69936803 T2 | 30-04-2008 |
| | | | EP | 1106799 A1 | 13-06-2001 |
| | | | EP | 1602403 A2 | 07-12-2005 |
| | | | EP | 1604728 A2 | 14-12-2005 |
| | | | EP | 1605144 A2 | 14-12-2005 |
| | | | EP | 1609977 A2 | 28-12-2005 |
| | | | EP | 1609978 A1 | 28-12-2005 |
| | | | ES | 2292032 T3 | 01-03-2008 |
| | | | ES | 2367719 T3 | 07-11-2011 |
| | | | JP | 2001303934 A | 31-10-2001 |
| | | | KR | 100413302 B1 | 31-12-2003 |
| | | | US | 2005034450 A1 | 17-02-2005 |
| | | | US | 2005204729 A1 | 22-09-2005 |
| | | | US | 2005217248 A1 | 06-10-2005 |
| | | | US | 2005217249 A1 | 06-10-2005 |
| | | | US | 2005262829 A1 | 01-12-2005 |
| | | | US | 2005262832 A1 | 01-12-2005 |
| | | | WO | 9967511 A1 | 29-12-1999 |
| EP 2570626 | A1 | 20-03-2013 | CN | 102510935 A | 20-06-2012 |
| | | | EP | 2570626 A1 | 20-03-2013 |
| | | | JP | 5333664 B2 | 06-11-2013 |
| | | | US | 2013052107 A1 | 28-02-2013 |
| | | | WO | 2011142028 A1 | 17-11-2011 |

EPO FORM P0459

For more details about this annex : see Official Journal of the European Patent Office, No. 12/82

**EP 3 141 716 A1**

**REFERENCES CITED IN THE DESCRIPTION**

**Patent documents cited in the description**

- WO 2013190658 A
- JP 2009270449 A